(19) Europäisches Patentamt
European Patent Office
Office européen des brevets

(11) **EP 3 163 866 B1**

(12) **EUROPEAN PATENT SPECIFICATION**

(45) Date of publication and mention
of the grant of the patent:
**06.05.2020 Bulletin 2020/19**

(21) Application number: **14896885.2**

(22) Date of filing: **24.10.2014**

(51) Int Cl.:
*H04N 7/15* (2006.01)    *H04N 7/14* (2006.01)

(86) International application number:
**PCT/CN2014/089438**

(87) International publication number:
**WO 2016/000359 (07.01.2016 Gazette 2016/01)**

(54) **SELF-ADAPTIVE DISPLAY METHOD AND DEVICE FOR IMAGE OF MOBILE TERMINAL, AND COMPUTER STORAGE MEDIUM**

VERFAHREN UND VORRICHTUNG ZUR SELBSTANPASSENDEN ANZEIGE EINES BILDES EINES MOBILEN ENDGERÄTS UND COMPUTERSPEICHERMEDIUM

PROCÉDÉ ET DISPOSITIF D'AFFICHAGE AUTO-ADAPTATIF POUR UNE IMAGE DE TERMINAL MOBILE, ET SUPPORT DE STOCKAGE INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 CN 201410309612**

(43) Date of publication of application:
**03.05.2017 Bulletin 2017/18**

(73) Proprietor: **ZTE Corporation
Shenzhen, Guangdong 518057 (CN)**

(72) Inventors:
• **LUO, Xiaoyan
Shenzhen, Guangdong 518057 (CN)**
• **FENG, Bin
Shenzhen, Guangdong 518057 (CN)**

• **ZHU, Cunwang
Shenzhen, Guangdong 518057 (CN)**
• **LIU, Mu
Shenzhen, Guangdong 518057 (CN)**

(74) Representative: **Baudler, Ron et al
Canzler & Bergmeier
Patentanwälte Partnerschaft mbB
Friedrich-Ebert-Straße 84
85055 Ingolstadt (DE)**

(56) References cited:
CN-A- 1 620 133      CN-A- 101 031 065
CN-A- 102 833 518      CN-A- 103 345 390
CN-A- 103 763 505      US-A1- 2002 093 531
US-A1- 2006 098 085      US-A1- 2010 056 219
US-A1- 2011 249 073      US-A1- 2013 271 560

EP 3 163 866 B1

## Description

Technical Field

The present invention relates to a video conference technology, in particular to an adaptive display method, a device and a computer storage medium for realizing the image of a mobile terminal.

Background

With the development of the communication technology and the mobile terminal technology, the mobile terminal can also be added to the video conference to perform the video and voice communication in real time. However, when the mobile terminal performs the multipoint video conference, due to the flexibility of the mobile terminals, for example, the mobile terminal can be freely rotated, the multi-pictures displayed on the mobile terminal should also generate the corresponding rotation when the mobile terminal is rotated, in order to meet the experience and the demand of the mobile terminal user. However, in the current technology, such as, displayed video picture rotating method proposed in the Chinese patent document with the public number as CN103220485A and the title of invention as "Displayed video picture rotating method and system", the picture rotation request sent by the terminal needs the user to participate, which is not self-adaptive; while in the Chinese patent document with the public number as CN101673537 and the title of invention as "Device and method for implementing selection of screen image", although the gravity sensing device is used to solve the automatic image rotation problem, however, the common problem of the above two lies in that the entire image of the picture is regarded as the processing unit during the picture rotation to rotate and zoom the picture, while it is unable to adjust the layout of each subpicture in the multi-pictures. Due to the limitation of the volume of the mobile terminal, the size and area of its display screen are limited; and especially when the multipoint video communication is performed and the participants are more, the small display screen cannot display clearly the contents of various pictures when more pictures are displayed.

US 2011/0249073 A1 discloses a method for initiating a video conference using a first mobile device. The method presents, during an audio call through a wireless communication network with a second device, a selectable user-interface (UI) item on the first mobile device for switching from the audio call to the video conference. The method receives a selection of the selectable UI item. The method initiates the video conference without terminating the audio call. The method terminates the audio call before allowing the first and second devices to present audio and video data exchanged through the video conference.

US 2002/0093531 A1 discloses a communication terminal for video conferencing with remote participants, including a receiver receiving audio and video signals from a plurality of the remote participants, and a display. In one form, a comparator compares the audio signals and a controller controls the display to display the video images extracted from the video signals based on the comparison of the received audio signals. In another form, the display has a height greater than its width and operates in a portrait mode in a default condition, and a controller controls the display to display the extracted video images in a landscape mode when the receiver receives the video signals from a plurality of the remote participants. In yet another form, a processor associates the received audio signals with the video signal received from the same remote participant, with the display displaying one of the video images on the right and another video image on the left, where an audio output sends the audio signal associated with the one video signal to a right speaker and sends the audio signal associated with the other video signal to a left speaker.

Summary of the Invention

In order to solve the existing technical problems, the present invention is expected to provide a self-adaptive display method and device for an image of a mobile terminal and a computer storage medium as defined by the independent claims.

The technical scheme of the present invention is realized like this:

the present invention provides a self-adaptive display method for an image of a mobile terminal, including:
determining, by a multipoint control terminal, the number K of sub-pictures which are permitted to be displayed by a mobile terminal in a current placement state; and selecting and sending K sub-pictures to the mobile terminal for display.

The present invention further provides a self-adaptive display device for an image of a mobile terminal, including: a sub-picture determination module and a sub-picture selection module; herein,
the sub-picture determination module is arranged to determine the number K of sub-pictures which are permitted by the mobile terminal in the current placement state; and the sub-picture selection module is arranged to select and send K sub-pictures to the mobile terminal for display.

The present invention further provides a computer storage medium, storing a computer program therein, and the computer program is arranged to perform the above self-adaptive display method for an image of a mobile terminal.

The present invention provides a self-adaptive display method and device for an image of a mobile terminal and a computer storage medium, a multipoint control terminal determines the number K of sub-pictures which are permitted to be displayed by a mobile terminal in a current placement state; and selects and sends K sub-pictures to the mobile terminal for display. So, the layout and content of the multi-pictures displayed by the mobile terminal are adjusted in real time dynamically according to the change of the placement state of the mobile terminal (such as, horizontal or vertical placement), so as to enhance the comfortable sensation to the picture of the customer performing the video communication by using mobile terminal.

Brief Description of Drawings

FIG. 1 is a flow chart of a self-adaptive display method for an image of a mobile terminal provided by an embodiment of the present invention;

FIG. 2 is a flow chart of a self-adaptive display method for an image of a mobile terminal provided by embodiment one of the present invention;

FIG. 3 is a schematic diagram of adjusting layout of multi-pictures provided by embodiment two of the present invention;

FIG. 4 is a schematic diagram of adjusting layout of multi-pictures provided by embodiment three of the present invention;

FIG. 5 is a flow chart of a processing method when A receives screen rotation information of D provided by embodiment three of the present invention;

FIG. 6 is a structural schematic diagram of a self-adaptive display device for an image of a mobile terminal provided by an embodiment of the present invention.

Specific Embodiments

In the embodiment of the present invention, a multipoint control terminal determines the number K of sub-pictures which are permitted to be displayed by a mobile terminal in a current placement state, and selects and sends K sub-pictures to the mobile terminal for display.

The present invention is further illustrated in details through the accompanying drawings and specific embodiments.

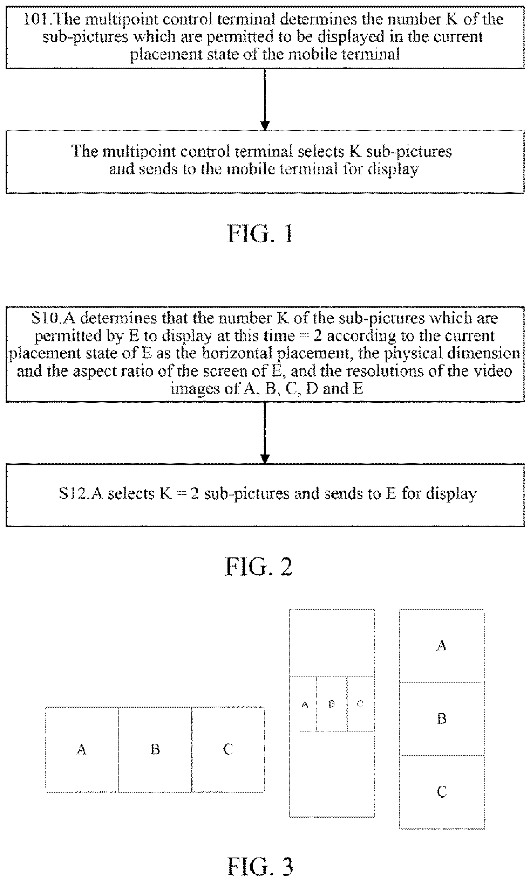

The embodiment of the present invention realizes a self-adaptive display method for an image of a mobile terminal. As shown in FIG. 1, the method includes the following steps 101-102.

In step 101: the multipoint control terminal determines the number K of the sub-pictures which are permitted to be displayed in the current placement state of the mobile terminal.

Specifically, in a multi-point video conference, the multipoint control terminal determines the number K of the sub-pictures which are permitted to be displayed by the mobile terminal in the placement state according to the current placement state of the mobile terminal in a multi-point video conference, screen information of the mobile terminal, and resolutions of video images of N conference terminal, herein, N represents the number of all conference terminals; or, the multipoint control terminal receives the number K of the sub-pictures which are permitted to be displayed in the current placement state sent by the mobile terminal in the multi-point video conference; the number K of the sub-pictures which are permitted to be displayed in the current placement state sent by the mobile terminal is: the mobile terminal determining the number K of the sub-pictures which are permitted to be displayed in the placement state according to the current placement state of the mobile terminal, screen information of the mobile terminal and resolution of video image of the mobile terminal. Here, the all conference terminals include: a multipoint control terminal, a mobile terminal and an ordinary video terminal, the multipoint control terminal refers to a terminal which is provided with a multipoint control unit (Multi Control Unit, MCU).

In addition, in the multi-point video conference, the multipoint control terminal can also identify a mobile terminal in the conference terminal, and determine the mobile terminal in the conference terminal according to the identification in the interactive information.

In the present step, the placement state includes: horizontal placement and vertical placement, and the screen information includes: physical dimension and aspect ratio of the screen.

The placement state and the screen information can be obtained by the multipoint control terminal through the interaction information during the interaction with of the mobile terminal, and the mobile terminal can obtain its own placement state through a built-in gravity induction device, and can obtain the screen information from its own stored device parameters, and carries the placement state and the screen information in the interactive information during the interaction with the multipoint control terminal; and the resolutions of the video images of the N conference terminals can be obtained by the multipoint control terminal when decoding the video images of the N conference terminals.

Here, the multipoint control terminal determining the number K of the sub-pictures which are permitted to be displayed by the mobile terminal in the placement state according to the current placement state of the mobile terminal in the multi-point video conference, the screen information of the mobile terminal, and the resolutions of video images sent by N conference terminals, includes: assuming that the received physical dimension of the screen of the mobile terminal is S (of which the unit is in), the aspect ratio of the screen is Wr:Hr, and the placement state is C, and setting the reference image resolution Rw*Rh and parameter t.

Firstly, width (W) and height (H) of the screen of the mobile terminal are calculated,

$$W/H = Wr/Hr$$

$$W^2 + H^2 = (S*2.54)^2.$$

The solution of the above equations is the calculated width and height of the screen (of which the unit is cm).

Then, the number K of the sub-pictures which can be displayed by the mobile terminal is calculated.

When the placement state of the screen C is the horizontal placement, N1 = floor (W/ (Rw*t)), and N2 = floor (H/ (Rh*t)).

When the placement state of the screen C is the vertical placement, N1 = floor (H/ (Rw*t)), and N2 = floor (W/ (Rh*t)).

Herein, floor is a function which returns a maximum integer that is less than or equal to a specified expression; and a minimum value of N1 and N2 is 1.

$$K = N1*N2.$$

The setting of the above reference image resolution Rw*Rh can be dynamically set according to the resolutions of the video images sent by N-1 conference terminals and the resolution of the video image the multipoint control terminal and also can be set to a fixed value.

In step 102: the multipoint control terminal selects and sends K sub-pictures to the mobile terminal for display.

Specifically, the multipoint control terminal selects and sends the K sub-pictures to the mobile terminal for display according to the selection criteria, the selection criteria includes: any criterion of volume size, resolution of a video image, bandwidth, chairman end, broadcast source and importance degree, etc.; or, a criterion obtained by combining at least two criteria of volume size, resolution of the video image, bandwidth, chairman end, broadcast source and importance degree, etc., in a weighting scheme; or, the multipoint control terminal selecting the sub-pictures by a mode of interacting with other conference terminals.

For example, the multipoint control terminal can select and send the K sub-pictures to the mobile terminal for display according to the volume sizes of the video images of the N conference terminals, for example, ranking the video images of the N conference terminals according to the volume sizes, and selecting K video images with big volume or small volume as the sub-pictures and sending to the mobile terminal for display.

Or, the multipoint control terminal can select the K sub-pictures for display according to the resolutions of the video images of the N conference terminals, for example, ranking the video images sent by the N conference terminals according to the resolution sizes, and selecting K video images with big resolution or small resolution as the sub-pictures and sending to the mobile terminal for display.

Or, the multipoint control terminal can select the K sub-pictures for display according to the bandwidths of the video images of the N conference terminals, for example, ranking the video images of the N conference terminals according to the bandwidth sizes, and selecting K video images with big bandwidth or small bandwidth as the sub-pictures and sending to the mobile terminal for display.

Or, the multipoint control terminal can select the K sub-pictures for display according to the chairman end in the N conference terminals, for example, identifying video images sent by the chairman ends in the video images of the N conference terminals, selecting K video images including the video images sent by the chairman end as the sub-pictures and sending to the mobile terminal for display.

Or, the multipoint control terminal can select the K sub-pictures for display according to the broadcast sources in the N conference terminals, for example, identifying the broadcast sources in the N conference terminals, selecting K video images including the video images sent by the broadcast source as the sub-pictures and sending to the mobile terminal for display.

Or, the multipoint control terminal can select the K sub-pictures for display according to the importance degrees of the video images of the N conference terminals, for example, identifying the importance degrees of the video images of the N conference terminals, selecting K video images of which the importance degrees are high as the sub-pictures and sending to the mobile terminal for display.

Or, the multipoint control terminal can select the K sub-pictures for display according to the volume sizes and resolutions of the video images of the N conference terminals, for example, sorting the video images of the N conference terminals according to the volume sizes, recording the ranking of the various conference terminals, then sorting the video images of the N conference terminals according to the resolutions, recording the ranking of the various conference terminals, and finally weighting the ranking of the N conference terminals according to the sorting of the volume sizes and the ranking according to the sorting of the resolutions, and selecting K video images with a high weighted value or a low weighted value as the sub-pictures and sending to the mobile terminal for display.

Or, the multipoint control terminal can select the K sub-pictures for display according to the bandwidths of the video images sent by the N conference terminals and the chairman end in the N conference terminals, for example, sorting the video images of the N conference terminals according to the bandwidth sizes, selecting the video images sent by the chairman end as a sub-picture for display, and selecting K-1 video images with the big bandwidth or small bandwidth as the sub-picture and sending to the mobile terminal for display.

Similarly, the multipoint control terminal can combine at least two criteria of volume size, resolution of a video image, bandwidth, chairman end, broadcast source and importance degree, etc., in a weighting scheme, and select K video images in the video images of N conference terminals as the sub-picture and send to the mobile terminal for display.

In addition, the multipoint control terminal can send a request message whether the display is required to other conference terminals, and select K video images in the video images sent by the conference terminal which requires the display as the sub-picture and send to the mobile terminal for display.

In the present step, the selecting and sending K sub-pictures to the mobile terminal includes: adjusting a display layout of the K sub-pictures, and sending video images of the K sub-pictures and the adjusted display layout to the mobile terminal; which specifically can be: pre-storing a layout template aimed at various numbers of sub-pictures, determining the used layout template according to the selected K sub-pictures, adjusting display size of the K video images according to the size of various sub-pictures in the used layout template, and sending the K video images and the used layout template to the mobile terminal; the layout template includes: a vertical layout template, a horizontal layout template, a grid layout template, an irregular sub-picture layout template, etc.

The adjusting the display layout of the K sub-pictures further includes: adjusting the display layout of parts of the sub-pictures in the K sub-pictures, which specifically can be: in the K sub-pictures, the display positions of L sub-pictures in a previous placement state relative to the current placement state are maintained as unchanged, M sub-pictures are adjusted to an empty display area suitable for the current placement state of the mobile terminal; if the current placement state is the horizontal placement, then the M sub-pictures are adjusted to the horizontal empty display area, and the sum of the M sub-pictures and the L sub-pictures is the K sub-pictures.

When the placement state of the mobile terminal is changed, the above method further includes: re-determining, by the multipoint control terminal, the number R of sub-pictures which are permitted to be displayed by the mobile terminal in a current placement state; and selecting and sending R sub-pictures to the mobile terminal for display.

In order to better understand the present invention, the present invention is further described by combining with the specific embodiments hereinafter.

Embodiment one

Hereinafter by taking 5 conference terminals (A, B, C, D and E) performing the video conference as an example, herein, A is the multipoint control terminal, E is the mobile terminal, and B, C and D are common video terminals; while the self-adaptive display method for the image of the mobile terminal realized by the present embodiment, as shown in FIG. 2, includes steps S10-S11.

In step S10, A determines that the number K of the sub-pictures which are permitted by E to display at this time = 2 according to the current placement state of E is the horizontal placement, the physical dimension and the aspect ratio of the screen of E, and the resolutions of the video images of A, B, C, D and E.

In step S11, A selects K = 2 sub-pictures and sends them to E for display.

Here, due to K<N (N = 5), then it is required to select the sub-pictures according to the selection criteria. Assuming that the set selection criterion for the sub-pictures is to select the sub-pictures according to the resolutions of the video images, and a relationship of the video resolutions of the five mobile terminals is: RA_B>RA_D>RA_A>RA_C>RA_E, and then two sub-pictures with the large resolutions, that is, the pictures of B and D, are selected according to the selection criteria, as the display sub-picture of E.

Embodiment two

Hereinafter by taking 3 conference terminals (A, B and C) performing the video conference as an example, herein, A is the multipoint control terminal, C is the mobile terminal, and B is a common video terminal; while the self-adaptive display method for the image of the mobile terminal realized by the present embodiment includes: A determines that the number K of the sub-pictures which can be displayed by C at this time = 3 according to the current placement state of C is the horizontal placement, the physical dimension and the aspect ratio of the screen of C, and the resolutions of the video images of A, B and C, that is, all conference terminals of the terminals attending the conference can be displayed at this time.

The K sub-pictures to be displayed are selected according to the selection criteria, at this time, K = N = 3, then the three pictures of A, B and C are selected as the display sub-picture of C, and the selected K sub-pictures are sent to C for display.

Assuming that the multi-picture layout of C is shown as the left chart in FIG. 3 at this time, the layouts of the three terminals, A, B and C, are arranged from left to right; FIG. 3 is only used for the description of the layout adjustment strategy of the multi-pictures, while not limited to the situation of using other layout adjustment strategies. If C is rotated from the initial horizontal placement to the vertical placement in the process of the video conference, then A will receive the change information of the placement state of C, thus it recalculates the number R of the sub-pictures which can be displayed by C in the vertical state; assuming that R = 3 is calculated and obtained at this time, then the three pictures of A, B and C are selected as the display sub-picture of C; and now it is required to adjust the layout of the sub-pictures, the position of the sub-pictures of B can be maintained as unchanged, and the sub-pictures of A and C are adjusted to empty display area at the vertical direction, and the adjusted multi-picture layout is shown as the right chart in FIG. 3. In the embodiment, it is assumed that each sub-picture occupies 1/3 of the entire screen. The middle schematic chart in FIG. 3 is a multi-picture display effect obtained by the related art, and the proportion of the screen area occupied by the final image picture of the technology is small, which does not fully utilize the entire display screen.

Embodiment three

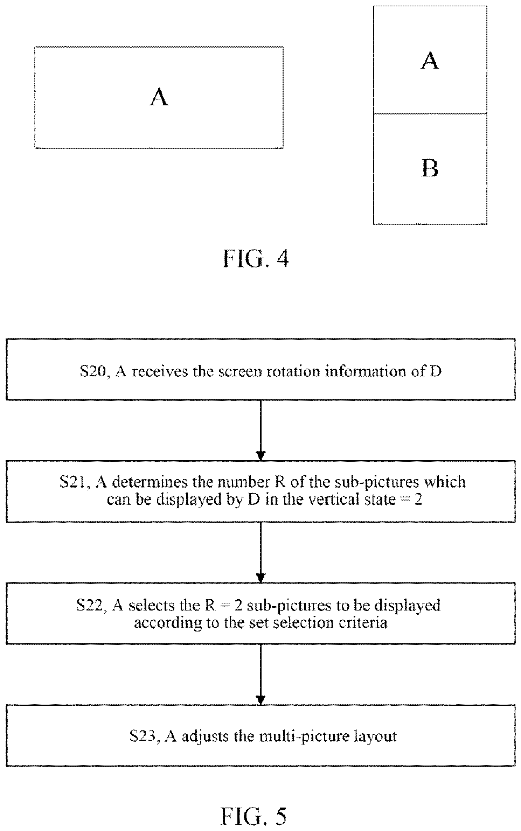

Hereinafter by taking 4 conference terminals (A, B, C and D) performing the video conference as an example, herein, A is the multipoint control terminal, D is the mobile terminal, and B and C are common video terminals; assuming that the screen size of D is 3.5in, the aspect ratio of the screen is 3:2, and the placement position before the rotation is the horizontal placement; assuming that it is calculated that the number of the sub-pictures which can be displayed by D is 1 at this time and pictures of A are selected according to the selection criteria for display, the display schematic diagram is shown in the left chart of FIG. 4; D is rotated in the process of attending the conference, the placement state is changed from the horizontal position into the vertical placement, and the process when A receives the screen rotation information of D is as shown in FIG. 5, including steps S20-S23.

In step S20, A receives the screen rotation information of D.

In step S21, A determines the number R of the sub-pictures which can be displayed by D in the vertical state = 2, and the calculation of R needs to be calculated according to the information, such as, the screen size and aspect ratio of D, and the resolutions of the video images of the four conference terminals, A, B, C and D, etc.

In step S22, A selects the R = 2 sub-pictures to be displayed according to the set selection criteria.

Here, it is assumed that the selection criteria are: selecting according to the volume size of the parties attending the conference from large to small; while if at this time the relationship of the volume sizes of various terminals is: VA>VB>VC>VD, then finally the pictures of terminal A and terminal B are selected as the display sub-picture of D according to the selection criteria.

In step S23, A adjusts the multi-picture layout.

Here, as shown in the right chart of FIG. 4, A can adjust the display layout as vertically arranging the picture of A and the picture of B, to regenerate the sub-picture layout of D, and A sends the picture of A, the picture of B and the regenerated sub-picture layout to D for display.

Embodiment four

Hereinafter by taking 5 conference terminals (A, B, C, D and E) performing the video conference as an example, herein, A is the multipoint control terminal, E is the mobile terminal, and B, C and D are common video terminals; while the self-adaptive display method for the image of the mobile terminal realized by the present embodiment includes: E determines that the number K of the sub-pictures which are permitted by E to display at this time = 2 according to its own current placement state is the horizontal placement, the physical dimension and the aspect ratio of its own screen, and the resolution of its own video image, and carries the number of the sub-pictures which are permitted to display K = 2 in the interactive information with A, and the interactive information can be a conference video connection confirmation or a conference video connection request etc.

A receives the number of the sub-pictures which are permitted by E to display K =2, and selects K = 2 sub-pictures and sends them to E for display.

Here, due to K<N (N = 5), then it is required to select the sub-pictures according to the selection criteria. Assuming that the set selection criterion for the sub-pictures is to select the sub-pictures according to the resolutions of the video images, then a relationship of the video resolutions of the five mobile terminals is: RA_B>RA_D>RA_A>RA_C>RA_E, and then two sub-pictures with the large resolutions, that is, the pictures of B and D, are selected according to the selection criteria, as the display sub-picture of E.

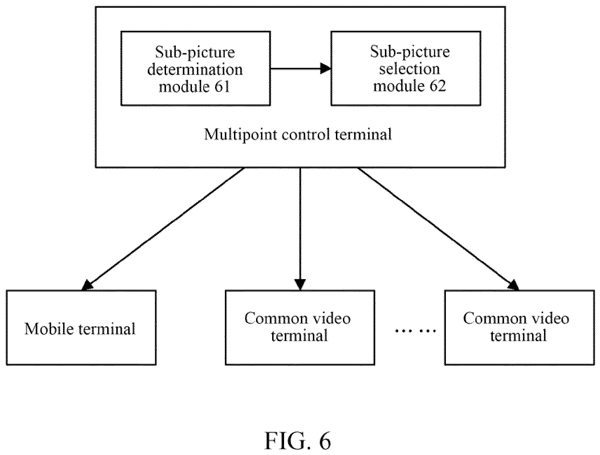

Based on the above self-adaptive display method for an image of a mobile terminal, the embodiment of the present invention further provides a self-adaptive display device for the image of the mobile terminal, herein, the device is arranged in the multipoint control terminal, as shown in FIG. 6, the device includes: a sub-picture determination module 61 and a sub-picture selection module 62.

The sub-picture determination module 61 can be realized by combining a communication interface and a processor, and is arranged to determine the number K of sub-pictures which are permitted to be displayed by a mobile terminal in a current placement state.

In the multi-point video conference, the sub-picture determination module 61 determines the number K of the sub-pictures which are permitted to be displayed by the mobile terminal in the placement state according to the current placement state of the mobile terminal in a multi-point video conference, screen information of the mobile terminal, and resolutions of video images of N conference terminal, N represents the number of all conference terminals; here, the all conference terminals include: a multipoint control terminal, a mobile terminal, and a common video terminal.

For obtaining the placement state and the screen information, the sub-picture determination module 61 can obtain through the interaction information during the interaction between the multipoint control terminal where itself is located and the mobile terminal, and the mobile terminal can obtain its own placement state through a built-in gravity induction device, and can obtain the screen information from its own stored device parameters, and carries the placement state and the screen information in the interactive information during the interaction with the multipoint control terminal; for obtaining the resolutions of the video images of the N conference terminals, the sub-picture determination module 61 can obtain when decoding the video images of the N conference terminals.

The sub-picture determination module 61 also can receive the number K of the sub-pictures which are permitted to be displayed in the current placement state sent by the mobile terminal in the multi-point video conference; the number K of the sub-pictures which are permitted to be displayed in the current placement state sent by the mobile terminal is: the mobile terminal determining the number K of the sub-pictures which are permitted to be displayed in the placement state according to the current placement state of the mobile terminal, screen information of the mobile terminal and resolution of video image of the mobile terminal.

The sub-picture selection module 62 can be realized by combining with the communication interface and the processor, and is arranged to select and send K sub-pictures to the mobile terminal for display.

Specifically, the sub-picture selection module 62 selects and sends the K sub-pictures to the mobile terminal for display according to the selection criteria, the selection criteria includes: any criterion of volume size, resolution of a video image, bandwidth, chairman end, broadcast source and importance degree, etc.; or, a criterion obtained by combining at least two criteria of volume size, resolution of the video image, bandwidth, chairman end, broadcast source and importance degree, etc., in a weighting scheme; or, the multipoint control terminal selecting the sub-pictures by a mode of interacting with N-1 conference terminals.

The sub-picture determination module 61 is further arranged to: re-determine the number R of sub-pictures which are permitted to be displayed by the mobile terminal in the current placement state when the placement state of the mobile terminal is changed; and the sub-picture selection module 62 is further arranged to select and send R sub-pictures to the mobile terminal for display.

When the self-adaptive display method for the image of the mobile terminal described by the embodiment of the present invention is realized in the form of software functional module and is sold or used as an independent product, it may be stored in a computer readable storage medium. Based on that understanding, those skilled in the art shall understand that the embodiment of the present application can be provided as a method, system, or computer program product. Therefore, the present application can use the form of entire hardware embodiment, entire software embodiment, or embodiment combining with software and hardware. Moreover, the application can adopt the form of computer program products implemented in one or more computer storage mediums which contain a computer usable program code, and the computer storage medium includes but not limited to U disk, mobile hard disk, read-only memory (ROM), disk storage, CD-ROM, optical memory, etc.

Accordingly, the embodiment of the present invention further provides a computer storage medium, storing a computer program therein, and the computer program is arranged to perform the self-adaptive display method for the image of the mobile terminal of the embodiment of the present invention.

The above description is only the preferred embodiments of the present invention and is not used to limit the protective scope of the present invention.

Industrial Applicability

Combining with the technical schemes described in various embodiments, the present invention can adjust the layout and content of the multi-pictures displayed by the mobile terminal in real time dynamically according to the change of the placement state of the mobile terminal (such as, horizontal placement or vertical placement), so as to enhance the comfortable sensation to the picture of the customer performing the video communication by using mobile terminal.

## Claims

1. A self-adaptive display method for an image of a mobile terminal, comprising:

   determining, by a multipoint control terminal, the number K of sub-pictures which are permitted to be displayed by a mobile terminal in a current placement state (101); and selecting and sending K sub-pictures to the mobile terminal for display (102), wherein, the determining, by the multipoint control terminal, the number K of sub-pictures which are permitted to be displayed by the mobile terminal in the current placement state comprises: the multipoint control terminal determines the number K of the sub-pictures which are permitted to be displayed by the mobile terminal in the placement state according to the current placement state of the mobile terminal in a multi-point video conference, screen information of the mobile terminal, and resolutions of video images of N conference terminals, wherein, N represents the number of all conference terminals (S10), or the determining, by the multipoint control terminal, the number K of sub-pictures which are permitted to be displayed by the mobile terminal in the current placement state comprises: the multipoint control terminal receives the number K of the sub-pictures which are permitted to be displayed in the current placement state sent by the mobile terminal in a multi-point video conference; the number K of the sub-pictures which are permitted to be displayed in the current placement state sent by the mobile terminal is: the mobile terminal determines the number K of the sub-pictures which are permitted to be displayed in the placement state according to the current placement state of the mobile terminal, screen information of the mobile terminal and resolution of video image of the mobile terminal.

2. The self-adaptive display method according to claim 1, wherein, the selecting and sending K sub-pictures to the mobile terminal for display comprises selecting and sending K sub-pictures to the mobile terminal for display according to a selection criterion.

3. The self-adaptive display method according to claim 2, wherein, the selection criteria comprises any criterion of volume size, resolution of a video image, bandwidth, chairman end, broadcast source and importance degree; or, a criterion obtained by combining at least two criteria, in a weighting scheme, of volume size, resolution of the video image, bandwidth, chairman end, broadcast source and importance degree; or, the multipoint control terminal selecting the sub-pictures by a mode of interacting with other conference terminals.

4. The self-adaptive display method according to claim 3, wherein, the selecting and sending K sub-pictures to the mobile terminal comprises adjusting a display layout of the K sub-pictures, and sending video images of the K sub-pictures and the adjusted display layout to the mobile terminal.

5. The self-adaptive display method according to claim 4, wherein, the adjusting a display layout of the K sub-pictures comprises adjusting a display layout of parts of sub-pictures in the K sub-pictures.

6. The self-adaptive display method according to claim 1, wherein, when the placement state of the mobile terminal is changed, the method further comprises re-determining, by the multipoint control terminal, the number R of sub-pictures which are permitted to be displayed by the mobile terminal in the current placement state; and selecting and sending R sub-pictures to the mobile terminal for display.

7. A self-adaptive display device for an image of a mobile terminal, comprising: a sub-picture determination module (61) and a sub-picture selection module (62); wherein,

the sub-picture determination module (61) is arranged to determine the number K of sub-pictures which are permitted by the mobile terminal in a current placement state; and

the sub-picture selection module (62) is arranged to select and send K sub-pictures to the mobile terminal for display,

wherein, the sub-picture determination module (61) is arranged to determine the number K of the sub-pictures which are permitted to be displayed by the mobile terminal in the placement state according to the current placement state of the mobile terminal in a multi-point video conference, screen information of the mobile terminal, and resolutions of video images of N conference terminals, wherein, N represents the number of all conference terminals, or

the sub-picture determination module (61) is arranged to receive the number K of the sub-pictures which are permitted to be displayed in the current placement state sent by the mobile terminal in a multi-point video conference; and the number K of the sub-pictures which are permitted to be displayed in the current placement state sent by the mobile terminal is: the mobile terminal determining the number K of the sub-pictures which are permitted to be displayed in the placement state according to the current placement state of the mobile terminal, screen information of the mobile terminal and resolution of video image of the mobile terminal.

8. The self-adaptive display device according to claim 7, wherein, the sub-picture selection module (62) is arranged to select and send K sub-pictures to the mobile terminal for display according to a selection criterion.

9. The self-adaptive display device according to claim 7, wherein,

the sub-picture determination module (61) is further arranged to: re-determine the number R of sub-pictures which are permitted to be displayed by the mobile terminal in the current placement state when the placement state of the mobile terminal is changed; and

the sub-picture selection module (62) is further arranged to select and send R sub-pictures to the mobile terminal for display.

10. A computer storage medium, storing a computer program therein, and the computer program is arranged to perform the self-adaptive display method for an image of a mobile terminal in any one of claims 1 to 6.

**Patentansprüche**

1. Ein selbstanpassendes Anzeigeverfahren für ein Bild eines mobilen Endgerätes, umfassend:

   Bestimmen(101), durch ein Mehrpunkt-Steuerungsendgerät, der Anzahl K von Teilbildern, die von einem mobilen Endgerät in einem aktuellen Platzierungszustand angezeigt werden dürfen; und
   Auswählen und Senden von K Teilbildern zum Anzeigen an das mobile Endgerät (102), wobei das Bestimmen der Anzahl K von Teilbildern, durch das Mehrpunkt-Steuerungsendgerät, die von dem mobilen Endgerät im aktuellen Platzierungszustand angezeigt werden dürfen, umfasst: Bestimmen, durch das Mehrpunkt-Steuerungsendgerät, der Anzahl K von Teilbildern, die von dem mobilen Endgerät im Platzierungszustand entsprechend dem aktuellen Platzierungszustand des mobilen Endgerätes in einer Mehrpunkt-Videokonferenz angezeigt werden dürfen, von Bildschirminformationen des mobilen Endgerätes und von Auflösungen der Videobilder von N Konferenz-Endgeräten, wobei N für die Anzahl aller Konferenz-Endgeräte (S10) steht, oder
   das Bestimmen der Anzahl K von Teilbildern, durch das Mehrpunkt-Steuerungsendgerät, die vom mobilen Endgerät im aktuellen Platzierungszustand angezeigt werden dürfen, umfasst: Erhalten, durch das Mehrpunkt-Steuerungsendgerät, der Anzahl K von Teilbildern, die im aktuellen Platzierungszustand, der vom mobilen Endgerät in einer Mehrpunkt-Videokonferenz gesendet wird, angezeigt werden dürfen; die Anzahl K von Teilbildern, die im aktuellen Platzierungszustand, der vom mobilen Endgerät gesendet wird, angezeigt werden dürfen, ist: Bestimmen, durch das mobile Endgerät, der Anzahl K von Teilbildern, die im Platzierungszustand entsprechend dem aktuellen Platzierungszustand des mobilen Endgerätes, angezeigt werden dürfen, der Bildschirminformationen des mobilen Endgerätes und der Auflösung des Videobildes des mobilen Endgerätes.

2. Selbstanpassendes Anzeigeverfahren nach Anspruch 1, wobei das Auswählen und Senden von K Teilbildern, zum Anzeigen, an das mobile Endgerät: die Auswahl und das Senden von K Teilbildern, zum Anzeigen, an das mobile Endgerät gemäß einem Auswahlkriterium umfasst.

3. Selbstanpassendes Anzeigeverfahren nach Anspruch 2, wobei die Auswahlkriterien ein beliebiges Kriterium aus der Volumengröße, der Auflösung eines Videobildes, der Bandbreite, des Endes durch den Vorsitzenden, der Sendequelle und des Wichtigkeitsgrades umfassen oder ein Kriterium, aus der Kombination zumindest zweier Kriterien aus Volumengröße, Auflösung des Videobildes, Bandbreite, Ende durch den Vorsitzenden, Sendequelle und Wichtigkeitsgrad, in Form eines Gewichtungsschemas, erhalten wird; oder das Mehrpunkt-Steuerungsendgerät, das die Teilbilder durch einen Modus der Interaktion mit anderen Konferenzendgeräten auswählt.

4. Selbstanpassendes Anzeigeverfahren nach Anspruch 3, wobei das Auswählen und Senden von K Teilbildern an das mobile Endgerät das Einstellen eines Anzeigelayouts der K Teilbilder und das Senden von Videobildern der K Teilbilder und des eingestellten Anzeigelayouts an das mobile Endgerät umfasst.

5. Selbstanpassendes Anzeigeverfahren nach Anspruch 4, wobei das Einstellen eines Anzeigelayouts der K Teilbilder das Einstellen eines Anzeigelayouts von Teilen der Teilbilder in den K Teilbildern umfasst.

6. Selbstanpassendes Anzeigeverfahren nach Anspruch 1, wobei, wenn der Platzierungszustand des mobilen Endgerätes geändert wird, das Verfahren ferner die Neubestimmung der Anzahl R von Teilbildern, durch das Mehrpunkt-Steuerungsendgerät, die von dem mobilen Endgerät im aktuellen Platzierungszustand angezeigt werden dürfen; und das Auswählen und Senden von R Teilbildern, zum Anzeigen, an das mobile Endgerät umfasst.

7. Selbstanpassende Anzeigevorrichtung für ein Bild eines mobilen Endgerätes, umfassend: ein Teilbildbestimmungsmodul (61) und ein Teilbildauswahlmodul (62); wobei,

   das Teilbildbestimmungsmodul (61) angeordnet ist, um die Anzahl K von Teilbildern zu bestimmen, die von dem mobilen Endgerät in einem aktuellen Platzierungszustand angezeigt werden dürfen; und das Teilbildauswahlmodul (62) angeordnet ist, um K Teilbilder auszuwählen und zum Anzeigen an das mobile Endgerät zu senden, wobei das Teilbildbestimmungsmodul (61) angeordnet ist, um die Anzahl K der Teilbilder, die von dem mobilen Endgerät im Platzierungszustand gemäß dem aktuellen Platzierungszustand des mobilen Endgerätes in einer Mehrpunkt-Videokonferenz, angezeigt werden dürfen, der Bildschirminformation des mobilen Endgerätes und der Auflösungen der Videobilder von N Konferenzendgeräten, wobei N die Anzahl aller Konferenzendgeräte darstellt, zu bestimmen oder

das Teilbildbestimmungsmodul (61) so angeordnet ist, dass es die Anzahl K der Teilbilder empfängt, die im aktuellen Platzierungszustand angezeigt werden dürfen, der von dem mobilen Endgerät in einer Mehrpunkt-Videokonferenz gesendet wird; und die Anzahl K der Teilbilder, die im aktuellen Platzierungszustand angezeigt werden dürfen, der von dem mobilen Endgerät gesendet wird, ist: das mobile Endgerät, die Anzahl K der Teilbilder, die im Platzierungszustand gemäß dem aktuellen Platzierungszustand des mobilen Endgerätes, angezeigt werden dürfen, die Bildschirminformation des mobilen Endgerätes und die Auflösung des Videobildes des mobilen Endgerätes, bestimmt.

8. Selbstanpassende Anzeigevorrichtung nach Anspruch 7, wobei das Teilbildauswahlmodul (62) so angeordnet ist, dass es K Teilbilder auswählt und nach einem Auswahlkriterium zum Anzeigen an das mobile Endgerät sendet.

9. Selbstanpassende Anzeigevorrichtung nach Anspruch 7, wobei das Teilbildbestimmungsmodul (61) ferner angeordnet ist, um die Anzahl R von Teilbildern neu zu bestimmen, die von dem mobilen Endgerät im aktuellen Platzierungszustand angezeigt werden dürfen, wenn der Platzierungszustand des mobilen Endgerätes geändert wird; und das Teilbildauswahlmodul (62) ferner angeordnet ist, um R Teilbilder auszuwählen und zum Anzeigen an das mobile Endgerät zu senden.

10. Ein Computerspeichermedium, in dem ein Computerprogramm gespeichert ist, und das Computerprogramm so angeordnet ist, dass es das selbstanpassende Anzeigeverfahren für ein Bild eines mobilen Endgerätes in einem der Ansprüche 1 bis 6 durchführt.

**Revendications**

1. Procédé d'affichage auto-adaptatif pour une image d'un terminal mobile, comprenant :

déterminer, par un terminal de contrôle en multipoint, le nombre K des images partielles qui peuvent être affichées par un terminal mobile dans un état de placement actuel (101) ; et sélectionner et envoyer K images partielles au terminal mobile pour affichage (102), dans lequel, la détermination, par le terminal de contrôle en multipoint, du nombre K des images partielles qui sont autorisées à être affichées par le terminal mobile dans l'état de placement actuel comprend : le terminal de contrôle en multipoint détermine le nombre K des images partielles qui sont autorisées à être affichées par le terminal mobile dans l'état de placement en fonction de l'état de placement actuel du terminal mobile dans une conférence vidéo en multipoint, des informations de l'écran du terminal mobile, et des résolutions des images vidéo de N terminaux de conférence, dans lesquelles, N représente le nombre de tous les terminaux de conférence (S 10), ou

la détermination, par le terminal de contrôle en multipoint, du nombre K des images partielles qui peuvent être affichées par le terminal mobile dans l'état de placement actuel comprend : le terminal de contrôle en multipoint reçoit le nombre K des images partielles qui peuvent être affichées dans l'état de placement actuel envoyées par le terminal mobile dans une conférence vidéo multipoint ; le nombre K des images partielles qui peuvent être affichées dans l'état de placement actuel envoyées par le terminal mobile est : le terminal mobile détermine le nombre K des images partielles qui peuvent être affichées dans l'état de placement selon l'état de placement actuel du terminal mobile, les informations d'écran du terminal mobile et la résolution de l'image vidéo du terminal mobile.

2. Procédé d'affichage auto-adaptatif selon la revendication 1, dans lequel la sélection et la transmission des K images partielles au terminal mobile pour l'affichage comprennent la sélection et la transmission des K images partielles au terminal mobile pour l'affichage selon un critère de sélection.

3. Procédé d'affichage auto-adaptatif selon la revendication 2, dans lequel les critères de sélection comprennent tout critère de grandeur de volume, de résolution d'une image vidéo, de largeur de bande, de fin de présidence, de source de diffusion et de degré d'importance ; ou, un critère obtenu par une combinaison d'au moins deux critères, dans un schéma de pondération, de la grandeur du volume, de la résolution de l'image vidéo, de la largeur de bande, de la fin du président, de la source de diffusion et du degré d'importance ; ou, le terminal de contrôle multipoint sélectionnant les images partielles par un mode d'interaction avec d'autres terminaux de conférence.

4. Procédé d'affichage auto-adaptatif selon la revendication 3, dans lequel la sélection et la transmission des K images partielles au terminal mobile comprennent l'ajustement d'une disposition d'affichage des K images partielles, et la transmission d'images vidéo des K images partielles et de la disposition d'affichage ajustée au terminal mobile.

5. Procédé d'affichage auto-adaptatif selon la revendication 4, dans lequel l'ajustement d'une disposition d'affichage des K images partielles comprend l'ajustement d'une disposition d'affichage de parties d'images partielles dans les K images partielles.

6. Procédé d'affichage auto-adaptatif selon la revendication 1, dans lequel, lorsque l'état de placement du terminal mobile est modifié, le procédé comprend en outre la redétermination, par le terminal de commande multipoint, du nombre R des images partielles qui sont autorisées à être affichées par le terminal mobile dans l'état de placement actuel ; et la sélection et la transmission des images partielles R au terminal mobile pour affichage.

7. Dispositif d'affichage auto-adaptatif pour une image d'un terminal mobile, comprenant : un module de détermination des images partielles (61) et un module de sélection des images partielles (62) ; dans lequel,

le module de détermination des images partielles (61) est agencé pour déterminer le nombre K d'images partielles qui sont autorisées par le terminal mobile dans un état de placement actuel ; et le module de sélection des images partielles (62) est agencé pour sélectionner et envoyer K images partielles au terminal mobile pour affichage,

dans lequel le module de détermination des images partielles (61) est agencé pour déterminer le nombre K d'images partielles qui peuvent être affichées par le terminal mobile dans l'état de placement selon l'état de placement actuel du terminal mobile dans une conférence vidéo en multipoint, les informations d'écran du terminal mobile et les résolutions des images vidéo de N terminaux de conférence, dans lequel N représente le nombre de tous les terminaux de conférence, ou

le module de détermination des images partielles (61) est agencé pour recevoir le nombre K des images partielles qui peuvent être affichées dans l'état de placement actuel envoyées par le terminal mobile dans une conférence vidéo multipoint ; et le nombre K des images partielles qui peuvent être affichées dans l'état de placement actuel envoyées par le terminal mobile est : le terminal mobile déterminant le nombre K des images partielles qui peuvent être affichées dans l'état de placement selon l'état de placement actuel du terminal mobile, les informations d'écran du terminal mobile et la résolution de l'image vidéo du terminal mobile.

8. Dispositif d'affichage auto-adaptatif selon la revendication 7, dans lequel, le module de sélection des images partielles (62) est agencé pour sélectionner et envoyer K images partielles au terminal mobile pour affichage selon un critère de sélection.

9. Dispositif d'affichage auto-adaptatif selon la revendication 7, dans lequel, le module de détermination des images partielles (61) est en outre agencé pour redéterminer le nombre R d'images partielles qui peuvent être affichées par le terminal mobile dans l'état de placement actuel lorsque l'état de placement du terminal mobile est modifié ; et le module de sélection des images partielles (62) est en outre agencé pour sélectionner et envoyer R images partielles au terminal mobile pour l'affichage.

10. Un support de stockage informatique, dans lequel est stocké un programme informatique, et le programme informatique est agencé pour exécuter le procédé d'affichage auto-adaptatif pour une image d'un terminal mobile dans l'une quelconque des revendications 1 à 6.

101.The multipoint control terminal determines the number K of the sub-pictures which are permitted to be displayed in the current placement state of the mobile terminal

The multipoint control terminal selects K sub-pictures and sends to the mobile terminal for display

## FIG. 1

S10.A determines that the number K of the sub-pictures which are permitted by E to display at this time = 2 according to the current placement state of E as the horizontal placement, the physical dimension and the aspect ratio of the screen of E, and the resolutions of the video images of A, B, C, D and E

S12.A selects K = 2 sub-pictures and sends to E for display

## FIG. 2

| A | B | C |

| A | B | C |

| A |
| B |
| C |

## FIG. 3

A

A

B

FIG. 4

S20, A receives the screen rotation information of D

S21, A determines the number R of the sub-pictures which can be displayed by D in the vertical state = 2

S22, A selects the R = 2 sub-pictures to be displayed according to the set selection criteria

S23, A adjusts the multi-picture layout

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103220485 A
- CN 101673537
- US 20110249073 A1
- US 20020093531 A1